# EUROPEAN PATENT APPLICATION

(11) **EP 1 255 211 A1**
(43) Date of publication of application: **06.11.2002**
(21) Application number: 01110595.4
(22) Date of filing: 30.04.2001
(51) Int. Cl.: G06F 17/60, G06F 17/21, G06F 17/24

(54) **Method and computer system for displaying a table with column header inscriptions having a reduced horizontal size**

(71) Applicant: Sun Microsystems, Inc., Santa Clara, California 95054 (US)
(72) Inventor: Janssen, Ocke, Sachsenfeld 4, 20097 Hamburg (DE)
(74) Representative: Betten & Resch

(57) **Abstract**

A data set representing the content of a data base, a spread sheet or text document or the like comprises a plurality of cells arranged in rows and columns, the columns including a header cell containing a header inscription. This header inscription of at least one selected column can be displayed with reduced horizontal size or width allowing the display of more columns on a fixed display size. A header inscription may be displayed in multiple lines, vertically, inclined or with a smaller character size or narrower character type.

## Description

### Field of the Invention

The present invention relates to the display of data in the form of a table comprising a plurality of cells arranged in rows and columns wherein the columns include a cell containing a header inscription.

### Description of the Related Art

In the software field it is often useful to represent data in the form of a table comprising a plurality of cells arranged in rows and columns. Every cell of the table has a particular function defined by the position within the table. Every column contains one cell describing the content of the cells of the column e.g. a parameter in a spread sheet table, a time period or geographical area in a table of a text or a presentation document. The cells describing the content of the columns of the table are normally arranged in one row, in the most cases in the first row of the table. The cells of this row preferably contain a so-called header inscription describing the content of the respective column in one or two words.

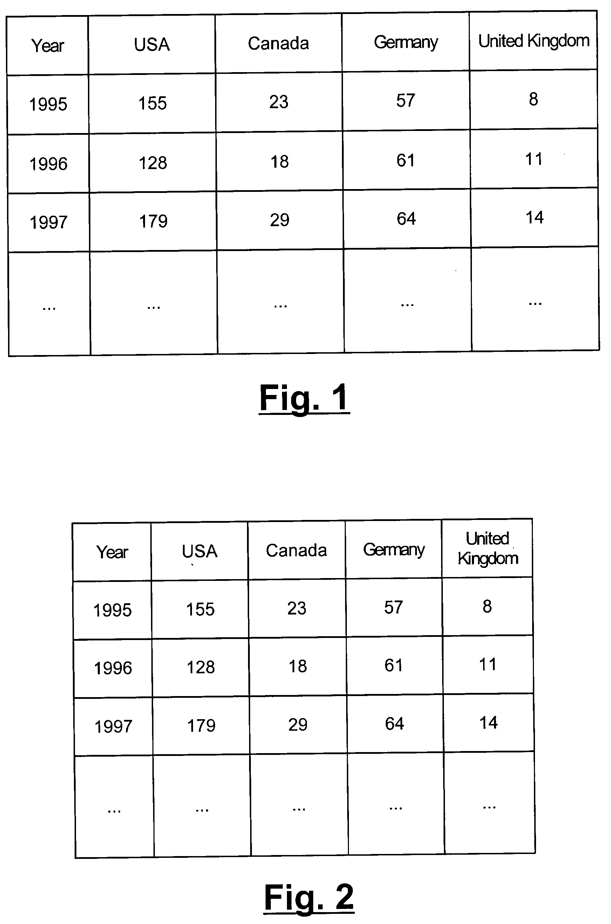

An example of such a table is shown in Figure 1. In many cases the header inscription of a table contains long words compared to the other cells of the table containing relatively short numerical values. In these cases the number of columns which can be displayed on a fixed display size is restricted by the horizontal size of the column header inscription. In the case of large tables containing a large number of columns it therefore may happen that not all columns of the table can be shown on the display. For viewing the whole table it is then necessary to scroll in horizontal direction which is cumbersome for the user.

### Summary of the Invention

According to the present invention there is provided a computer-implemented method of displaying a data set in the form of a table comprising a plurality of cells arranged in rows and columns, the columns including a cell containing a header inscription, wherein the header inscription of at least one selected column is displayed having a reduced horizontal size.

With the present invention it is possible for a user to select one or a plurality of the columns and initiate by pressing a key of a mouse or keyboard or the like a "smaller" display of the header inscription of this or these columns. It should be acknowledged here that the expression header is not restricted to the first row of a table. The invention is equally applicable to any cell of a column containing an inscription.

When the inscription(s) of the selected column(s) is subsequently to the selection by the user displayed having a reduced horizontal width more columns of the table can be displayed on a given display area. The handling in particular of large tables is thus facilitated for the user.

The reduced horizontal width can be achieved by displaying the selected inscription in multiple lines, by displaying the characters of the inscription vertically or diagonally, by using a smaller character size or a narrower character type or a combination of any of these measures.

According to a particular embodiment of the invention the header inscriptions of all columns are simultaneously displayed with a reduced horizontal size. This provides a preferred aesthetic appearance, in particular if the inscription is displayed in a diagonal manner.

The table may represent data of any type, for example data in a data base or a spread sheet document. The table may e.g. be also contained in a presentation document, text document or website.
The present invention further provides a computer system for displaying on a display device, a data set as a table, comprising a plurality of cells arranged in rows and columns, the columns including a header cell containing a header inscription, the computer system comprising an input unit for receiving a user input signal selecting at least one of said columns and a display control unit for displaying the header inscription of the selected at least one column with a reduced horizontal size.

A still further implementation of the present invention may be realized by a computer program product comprising computer readable code for displaying a data set in the form of a table comprising a plurality of cells arranged in rows and columns, the columns including a header cell containing a header inscription, wherein the header inscription of at least one selected column is displayed having a reduced horizontal size.

A program code may be embodied in any form of a computer program product. A computer program product comprises a medium which stores or transports computer-readable code, or in which computer-readable code can be embedded. Some examples of computer program products are CD-ROM disks, DVD-ROM disks, ROM-Cards, floppy-disks, magnetic tapes, computer hard drives, servers on a network and signals transmitted over a network representing a computer-readable program code.

The present invention still further provides a software tool for displaying data in the form of a table comprising a plurality of cells arranged in rows and columns, the columns including a header cell containing a header inscription, wherein the header inscription of at least one selected column is displayed having a reduced horizontal size.

The above-mentioned and other features, utilities and advantages of the present invention will become more apparent from the following detailed description of preferred embodiments thereof in connection with the accompanying drawings.

### Brief Description of the Drawings

Figure 1 illustrates a table having conventional header inscriptions.
Figure 2 illustrates a table with column header inscription according to a first embodiment of the present invention.
Figure 3 illustrates a table with column header inscription according to a second embodiment of the present invention.
Figure 4 illustrates a table with column header inscription according to a third embodiment of the present invention.
Figure 5 illustrates a table with column header inscription according to a fourth embodiment of the present invention.
Figure 6 illustrates a table with column header inscription according to a fifth embodiment of the present invention.
Figure 7 is a flow chart illustrating a first embodiment of the method according to the present invention.
Figure 8 is a flow chart illustrating a method according to a second embodiment of the present invention.
Figure 9 illustrates an example of user selection menues displayed according to the present invention.
Figure 10 is a schematic illustration of a computer system to which the present invention may be applied.

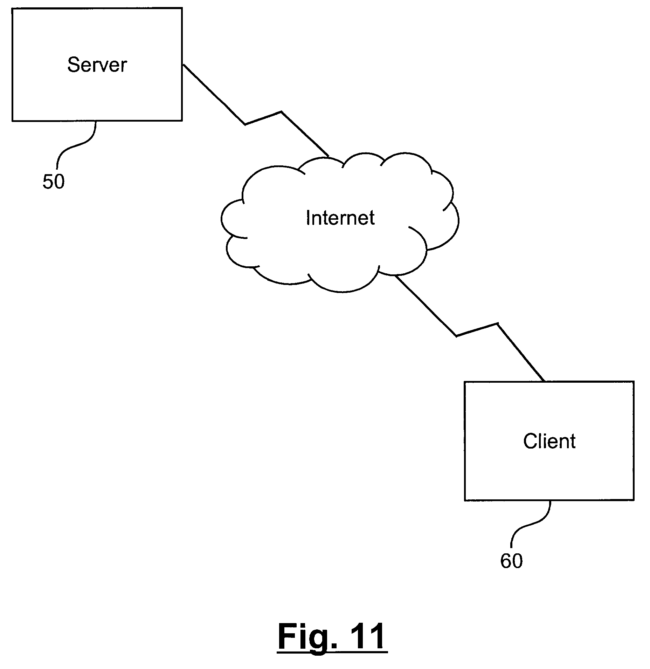

Figure 11 is a schematic illustration of a client-server-configuration to which the present invention may also be applied.

### Detailed Description of Particular Embodiments

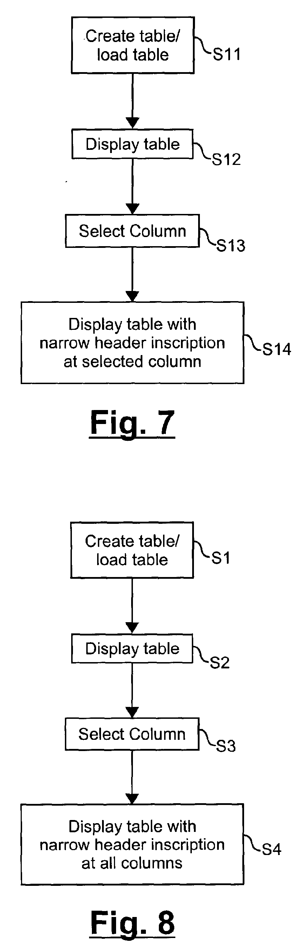

A first embodiment of a present invention is now explained in detail with reference to the flow chart of Figure 7 and the illustrations of Figures 1 to 6.

Figure 1 schematically illustrates a table depicting sales figures of a product in four different countries over a certain period of time. The rows represent years and the columns the respective countries. In the cells the sales figures for each country and year are shown.

It should be noted here that the present invention is not restricted to any particular type, size or design of a table. The table may contain any type of information, represent the data of a data base or a spread sheet document or be included in a text document, presentation document, website or the like.

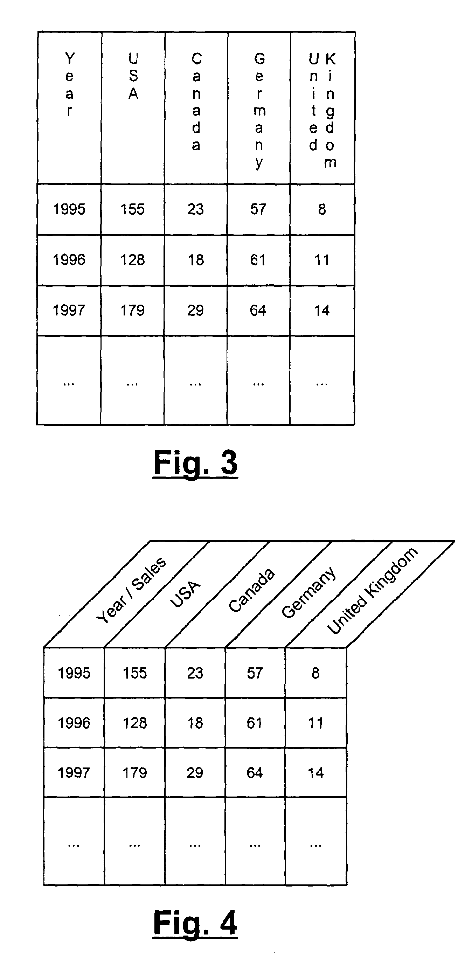

The table like that illustrated in Figure 1 is created by the user or loaded from a memory or imported over a telecommunication network in method step S1 in the flow chart of Figure 7. The table is then, in step S2, displayed on a display screen. If the table contains a large number of columns it may be impossible to display the whole table on the display screen so that it becomes necessary to scroll the table in horizontal direction in order to view the complete table. In many cases the necessary width of a column column is defined by the header inscriptions of the columns. In the next step S3 the user therefore selects one column, in the case shown in Figure 1 the right most column, for display of the inscription with reduced horizontal width. In this case it is the inscription "United Kingdom" which is displayed in two lines therefore reducing the horizontal space needed by the column (Figure 2). In the case of the inscription "United Kingdom" the display in two lines is preferred since the inscription contains two words. In the case of "Germany" this would be more difficult. For these cases other inscription representations having reduced size can be selected. One alternative possibility is the vertical display of the column header inscriptions as shown in Figure 3. For aesthetic reasons it is advantageous to display not only one but all column header inscriptions in this way. In order to restrict the vertical space needed the inscription may be displayed in two vertical columns as shown in Figure 3 for "United Kingdom".

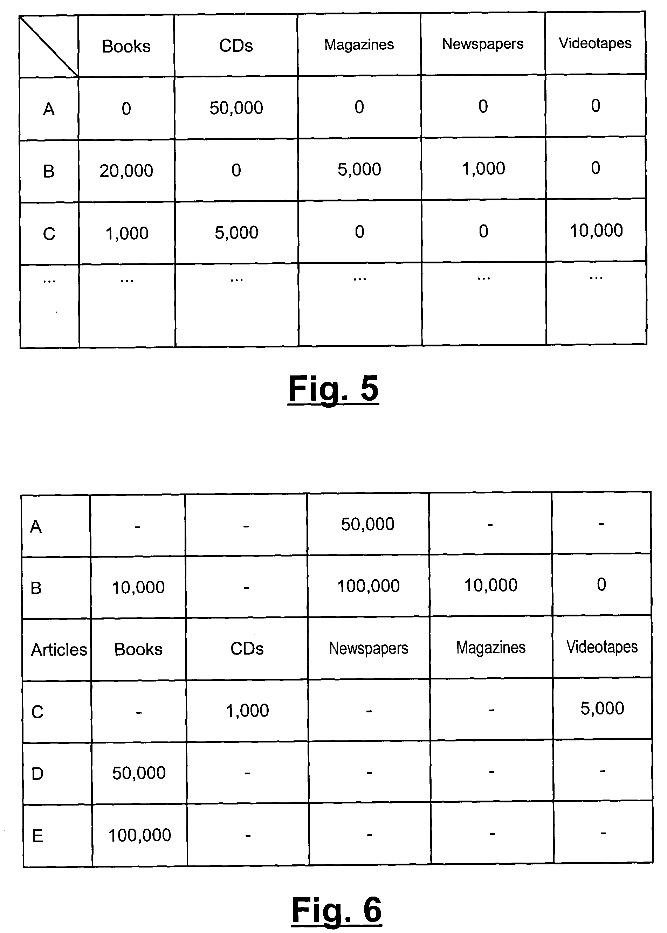

A further alternative embodiment is shown in Figure 4. The column header inscriptions are all displayed inclined with a predetermined or selectable angle with respect to the horizontal line of the table. This display style also gives the header inscriptions a three-dimensional appearance and may therefore be particularly suitable for publication or presentation documents.

A still further embodiment is shown in Figure 5. The table shown in this Figure shows the inventory of certain products, i.e. books, CD's, magazines, etc. in different warehouses A, B, C. The header inscriptions "magazines", "video tapes" and "newspapers" are displayed with a smaller character size so that the horizontal space needed is reduced.

As a further alternative a character type with narrow characters may be selected as shown in Figure 6. This Figure also shows an example in which the header cells are not located on top of each column but in the middle.

Returning to the flow chart of Figure 7, after selection of one or a plurality of columns in step S3, the table is subsequently displayed with narrow header inscriptions of the selected column (S4). If the user is satisfied with the table display, he can go on working with the table. Otherwise, he may select further columns to change the display of the header inscriptions in order to further reduce the horizontal space needed.

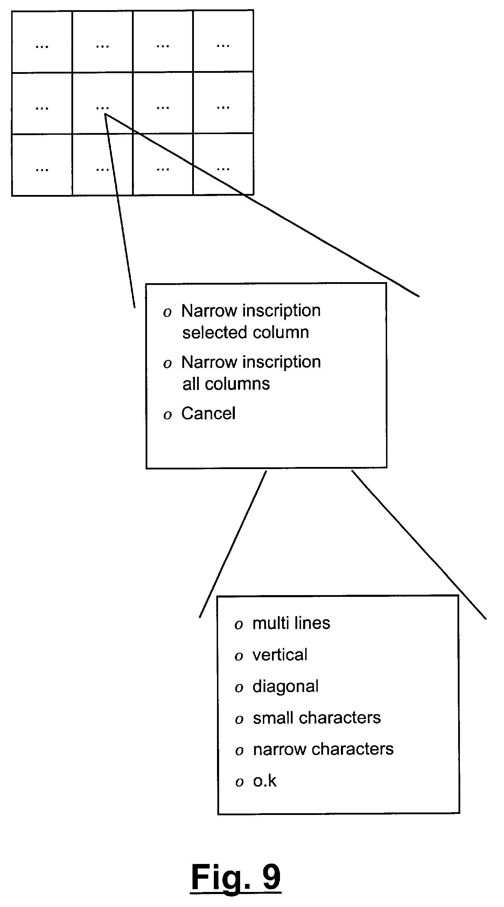

A second embodiment of the method according to the present invention is schematically shown in Figure 8. After creating or loading a table and subsequently displaying the same on a display screen the user selects at least one column for reducing header inscription width. Upon selection of at least one column the column header inscriptions of all columns of the table are then displayed with the reduced width style as in the examples shown in Figures 3 and 4.

It should be mentioned here that a combination of alternative ways of reducing the width of column header inscriptions is also possible, for example a combination of multiline representation (Figure 1) with small or narrow characters (Figures 4 or 5) or a combination of diagonal representation (Figure 3) with small or narrow characters (Figure 4 and 5 respectively).

One possible implementation of the user interfaces for handling the present invention is now explained with reference to Figure 8. After selecting the column of a table 1, for example with the right mouse button, a first window 10 is opened asking if the selected column should be displayed with narrower header inscription or if all columns should be displayed in this way. If the user selects one of these options a pull down menu 11 is opened in which the user can select the different header inscription styles explained in connection with Figures 2 to 6. The user may select one or a combination of these styles which are then applied to the table after pressing the virtual "o.k." button.

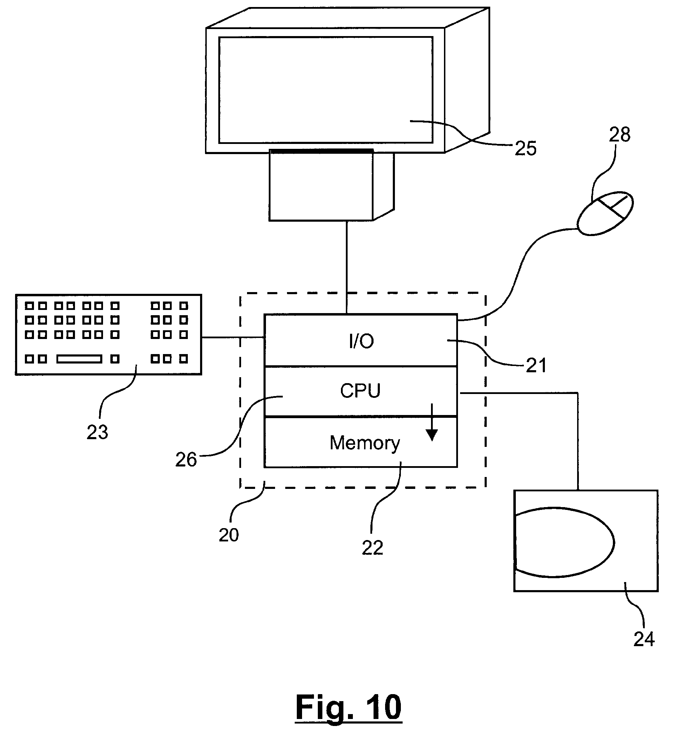

The present invention is applicable to a hardware configuration like a personal computer or a workstation as illustrated schematically in Figure 10. The computer may comprise a central processing unit CPU 26 including a display control unit, an input/output unit 21, an internal memory 22 and an external memory 24. The table can be displayed on any type of display screen 25 like a cathode ray tube, a liquid crystal display or plasma display. User commands are input through standard input devices like a keyboard 23, a mouse 28 or speech processing means (not illustrated).

The invention, however, may also be applied to a client-server-configuration as illustrated in Figure 10. The table may be displayed on a display screen of a client device 60 while some or all processing in connection with the present invention is carried out on a server computer 50 accessible by the client device 60 over a data network as the internet using a browser application or the like.

While the invention has been particularly shown with reference to a preferred embodiment thereof, it will be understood by those skilled in the art that various other changes in the form and details may be made therein without departing from the spirit and scope of the invention.

## Claims

1. A computer-implemented method of displaying a data set in the form of a table comprising a plurality of cells arranged in rows and columns, the columns including a cell containing a header inscription, wherein the header inscription of at least one selected column is displayed having a reduced horizontal size.

2. The method of claim 1, wherein the header inscription of the selected column is displayed in multiple lines.

3. The method of claim 1, wherein the header inscription of the selected column is displayed as a vertical inscription.

4. The method of claim 1, wherein the header inscription of the selected column is displayed having a predetermined angle with respect to the horizontal line of the table.

5. The method of one of claims 1 to 4, wherein the header inscription of the selected column is displayed having a reduced character size.

6. The method of one of claims 1 to 5, wherein the header inscription of the selected column is displayed having a narrower character type.

7. The method of any one of claims 1 to 6, wherein upon selecting a column, the header inscriptions of a plurality of columns are simultaneously displayed with a reduced horizontal size.

8. The method of claim 7, wherein the header inscriptions of all columns of the table are displayed with reduced horizontal size.

9. The method of anyone of claims 1 to 8, wherein the data set contains data stored in a data base.

10. The method of anyone of claims 1 to 8, wherein the table is a spread sheet table.

11. The method of anyone of claims 1 to 8, wherein the table is a table of a text or publication document.

12. A computer system for displaying on a display device, a data set as a table, comprising a plurality of cells arranged in rows and columns, the columns including a header cell containing a header inscription, the computer system comprising an input unit for receiving a user input signal selecting at least one of said columns and a display control unit for displaying the header inscription of the selected at least one column with a reduced horizontal size.

13. The computer system of claim 12, wherein the header inscription of the selected column is displayed in multiple lines.

14. The computer system of claim 12, wherein the header inscription of the selected column is displayed as a vertical inscription.

15. The computer system of claim 12, wherein the header inscription of the selected column is displayed having a predetermined angle with respect to the horizontal line of the table.

16. The computer system of one of claims 12 to 15, wherein the header inscription of the selected column is displayed having a reduced character size.

17. The computer system of one of claims 12 to 16, wherein the header inscription of the selected column is displayed with a narrower character type.

18. The computer system of one of claims 13 to 18, wherein the display control unit is adapted for, upon selection of one column, simultaneously displaying the header inscriptions of a plurality of columns with a reduced horizontal size.

19. The computer system of claim 18, wherein the display control unit is adapted for displaying the header inscriptions of all columns with a reduced horizontal size.

20. The computer system of anyone of claims 12 to 19, wherein the data set contains data stored in a data base.

21. The computer system of anyone of claims 12 to 19, wherein the table is a spread sheet table.

22. The computer system of anyone of claims 12 to 19, wherein the table is a table of a text document.

23. A computer program product comprising computer readable code for displaying a data set in the form of a table comprising a plurality of cells arranged in rows and columns, the columns including a header cell containing a header inscription, wherein the header inscription of at least one selected column is displayed having a reduced horizontal size.

24. A computer program comprising computer readable code for carrying out the method of anyone of claims 1 to 11.

25. A software tool for displaying data in the form of a table comprising a plurality of cells arranged in rows and columns, the columns including a header cell containing a header inscription, wherein the header inscription of at least one selected column is displayed having a reduced horizontal size.
